# DEMANDE DE BREVET EUROPEEN

(11) **EP 1 445 046 A1**
(43) Date de publication de la demande: **11.08.2004**
(21) Numéro de dépôt: 03447021.1
(22) Date de dépôt: 07.02.2003
(51) Int. Cl.: B22D 41/58, B22D 41/50, F16B 13/08, F16B 13/06

(54) **Dispositif de connexion d'une canalisation de circulation de fluide à une pièce réfractaire et pièce réfractaire**

(71) Demandeur: Vesuvius Crucible Company, Wilmington, DE 19803 (US)
(72) Inventeur: Richard, François-Noel, 88170 Chatenois (FR); Ruffaldi, Aldo, 1950 Kraainem (BE)
(74) Mandataire: Debled, Thierry

(57) **Abrégé**

L'invention concerne un dispositif de connexion d'une canalisation (6) de circulation de fluide à une pièce réfractaire (1) ayant une paroi munie d'un évidement cylindrique (5a, 5b), comprenant un joint (14) destiné à être logé dans l'évidement et une première pièce d'appui (13) comprimant le joint depuis l'extérieur de l'évidemment.

Une seconde pièce d'appui (9b), apte à être insérée dans l'évidemment, prend le joint (14) en sandwich avec la première pièce d'appui (13), et un tirant (9a) rapproche les deux pièces d'appui pour mettre le joint en compression.

L'invention concerne également une pièce réfractaire (1), notamment une busette ou un tube de coulée, munie d'un évidement cylindrique (5) dimensionné pour recevoir deux pièces d'appui (9b, 13) et un joint d'étanchéité (14) pris en sandwich entre ces deux pièces d'appui.

## Description

L'invention concerne un dispositif de connexion d'une canalisation de circulation de fluide à une pièce réfractaire, notamment à une quenouille, une busette ou un tube de coulée, par exemple pour introduire un gaz dans un canal de coulée, pour pressuriser une chambre, pour mesurer une pression ou pour pomper un gaz. L'invention concerne également une pièce réfractaire.

Du document FR-A1-2763012, on connaît un dispositif de connexion pour une pièce réfractaire dans la paroi latérale de laquelle est ménagé un siège, ce dispositif comprenant un joint compressible monté sur le siège, une pièce d'appui supportée par la face externe de la paroi latérale et des moyens élastiques, intercalés entre la pièce d'appui et le joint, qui appliquent ce dernier contre le siège. La pièce d'appui comprend un cerclage ou un arceau qui ceinture la pièce réfractaire. Dans les deux cas, la région de la pièce réfractaire située à l'opposé du siège reprend la force de réaction, nécessaire à la mise en compression du joint, qui lui est transmise par la pièce d'appui.

Dans un tel dispositif, la pièce d'appui présente de grandes dimensions, de sorte que sa dilatation thermique entraîne un accroissement significatif de la distance laissée pour le joint entre le siège et ladite pièce d'appui, ce qui oblige à prévoir des moyens élastiques relativement volumineux, en comparaison avec la taille du joint, pour compenser cet accroissement et maintenir une pression suffisante sur le joint.

Le document WO-A1-01/83138 propose de réduire cet inconvénient en logeant une pièce métallique intermédiaire dans la dilatation peut compenser la dilatation de la pièce d'appui. Dès lors, le joint reste en permanence en contact avec le siège et permet de maintenir une bonne étanchéité malgré les variations de température. L'extrémité supérieure de la pièce métallique doit toutefois également être bloquée, par exemple au moyen d'une soudure la solidarisant à la ceinture.

La présente invention vise à proposer une solution plus compacte et plus simple, dans laquelle il n'est pas nécessaire de ceinturer la pièce réfractaire.

La présente invention a pour objet un dispositif de connexion d'une canalisation de circulation de fluide à une pièce réfractaire ayant une surface munie d'un évidement cylindrique, comprenant un joint destiné à être logé dans l'évidement et une première pièce d'appui comprimant le joint depuis l'extérieur de l'évidement. Ce dispositif est caractérisé en ce qu'il comporte une seconde pièce d'appui, apte à être insérée dans l'évidement pour prendre le joint en sandwich avec la première pièce d'appui, et un tirant apte à rapprocher les deux pièces d'appui pour mettre le joint en compression.

Les deux pièces d'appui exercent une pression axiale sur le joint, ce qui provoque une expansion radiale de ce dernier et son application contre la paroi de l'évidement dans lequel il est logé. L'originalité de l'invention réside dans le fait que la mise en compression du joint ne requiert aucune prise d'appui sur la pièce réfractaire, car les deux pièces d'appui sont rapprochées l'une de l'autre autour du joint. Ainsi, aucun effort, autre que celui résultant de l'expansion radiale du joint, n'est appliqué sur la pièce réfractaire. Cet effort radial est, par définition, bien réparti sur les parois de l'évidement et ne génère pas de contraintes susceptibles d'entraîner une défaillance de la pièce réfractaire. Cet avantage est sera d'autant plus marqué si l'évidement possède une section transversale se rapprochant du cercle. C'est pourquoi, selon une forme de réalisation avantageuse de l'invention, l'évidement possède une section transversale substantiellement circulaire. La forme du joint du dispositif selon l'invention est bien évidemment adaptée à la forme de l'évidement. Dans tous les cas, aucune force de réaction axiale (dont la résultante est un poussée du joint vers l'extérieur de l'évidement) n'est donc nécessaire de la part de la pièce réfractaire pour cette mise en compression du joint.

En outre, selon la présente invention, il n'est pas nécessaire d'apporter un soin particulier à la surface du fond de l'évidement dès lors que, contrairement aux solutions de l'état de la technique, selon l'invention, l'étanchéité de la connexion n'est pas assurée à l'interface d'un joint d'étanchéité avec cette surface de fond. Cette caractéristique permet, très avantageusement, de réaliser des économies substantielles sur les coûts de production de la pièce réfractaire.

En conséquence, l'invention est simple à réaliser, sous réserve d'un dimensionnement correct des différents constituants qu'elle met en oeuvre. En particulier, le joint et la seconde pièce d'appui présentent de préférence des dimensions permettant leur introduction sans effort dans l'évidement. La mise en compression du joint assure alors non seulement l'étanchéité de la connexion, mais également la fixation de l'ensemble à la pièce réfractaire. On peut même envisager, dans le cas d'une quenouille, de suspendre cette dernière au moyen du dispositif selon l'invention.

En prévoyant un moyen pour assujettir la canalisation au tirant ou à la première pièce d'appui, on obtient alors un dispositif autonome de connexion et de maintien du conduit de fluide à la pièce réfractaire.

De plus, le joint, les deux pièces d'appui et le tirant forment un ensemble relativement compact, au sein duquel les dilatations thermiques sont limitées, ce qui limite en conséquence la mesure dans laquelle la pression axiale du joint risque d'être diminuée.

Dans un mode de réalisation préféré, on utilise un joint en matériau réfractaire élastique, par exemple en graphite.

Dans un autre mode de réalisation, on juxtapose au joint un moyen élastique, par exemple une rondelle élastique, pour compenser les dilatations thermiques du tirant et des pièces d'appui.

Dans un mode de réalisation particulier de l'invention, le tirant est un corps tubulaire traversé par un canal de passage du fluide. Ce tirant peut en outre comporter un filetage externe, tandis que l'une au moins de pièces d'appui comporte un taraudage correspondant, le rapprochement des deux pièces d'appui résultant d'un vissage de cette pièce d'appui sur le tirant. Dans ce cas, la force avec laquelle le joint est comprimé sur la paroi de l'évidement est déterminée par le couple de serrage appliqué lors de ce vissage.

Le tirant peut être solidaire d'une des pièces d'appui, par exemple de la seconde qui est logée dans l'évidement.

Dans une variante particulière de ce mode de réalisation, des moyens anti-rotation sont prévus pour bloquer en rotation le tirant introduit dans l'évidement. De tels moyens anti-rotation peuvent consister en des méplats formés sur des flancs du tirant, dans une portion de celui-ci accessible depuis l'extérieur de l'évidement, ou par une forme anti-rotation coopérant avec une forme correspondante de l'évidement.

Une rondelle d'espacement, par exemple en matériau réfractaire ou en acier, peut également être juxtaposée au joint, du côté de la première pièce d'appui, pour empêcher le joint s'étendant radialement d'appliquer un effort radial trop près des bords de l'évidement, qui sont plus fragiles que le reste de la paroi.

Un méplat peut également être formé sur la paroi latérale de la pièce réfractaire, à l'embouchure de l'évidement, pour recevoir une rondelle de positionnement entre la première pièce d'appui et l'ensemble constitué du joint et éventuellement des moyens élastiques, ainsi qu'éventuellement de la rondelle d'espacement. Cette rondelle de positionnement procure un référentiel pour l'introduction de la seconde pièce d'appui, du joint et du tirant, par rapport à la face externe de la paroi de la pièce réfractaire. De plus, cette rondelle de positionnement rigidifie la connexion, en s'appuyant sur la paroi latérale de la pièce réfractaire, et contribue au maintien du conduit de fluide dans sa direction la plus avantageuse par rapport à cette paroi.

De préférence, la section transversale de l'évidement est circulaire.

L'invention a également pour objet une pièce réfractaire, notamment une busette ou un tube de coulée, telle que décrite ci-dessous, caractérisé notamment en ce qu'elle comporte un évidement cylindrique dimensionné pour recevoir deux pièces d'appui et un joint d'étanchéité pris en sandwich entre ces deux pièces d'appui.

Dans des modes de réalisation particuliers :
- un méplat est formé autour de l'embouchure de l'évidement ;
- une forme anti-rotation est ménagée dans l'évidement pour empêcher l'une des pièces d'appui de tourner.

Afin de faciliter la compréhension de l'invention, on va maintenant en décrire un exemple de réalisation, donné à titre d'exemple non limitatif, en référence aux dessins annexés dans lesquels :
- la figure 1 est une vue en coupe d'un tube de coulée (busette immergée) utilisé pour la coulée d'acier liquide;
- la figure 2 est une vue du détail de la figure 1.

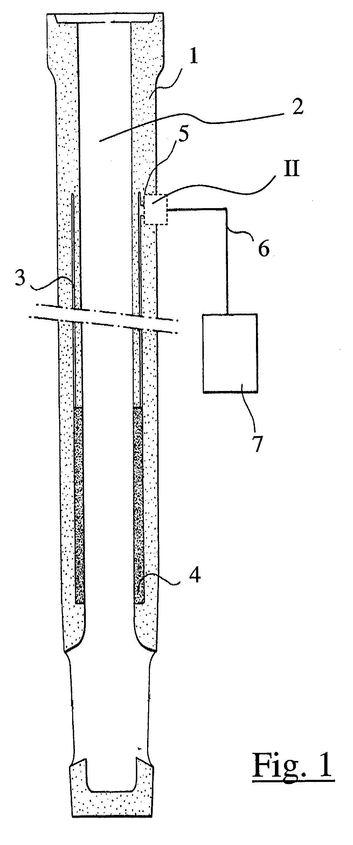

Dans la busette 1 de la figure 1, l'acier qui s'écoule dans le canal 2 est protégé de l'atmosphère extérieure par un apport de gaz, afin notamment d'éviter la formation et le dépôt d'alumine sur la paroi intérieure du canal. Un gaz couramment utilisé à cet effet est l'argon.

Pour permettre son injection, la busette comporte un passage annulaire 3 qui aboutit à une manchette 4 en matériau poreux, laquelle diffuse l'argon à la surface du canal 2 et forme une gaine protectrice réduisant le contact entre l'acier et le matériau réfractaire. Le passage annulaire 3 est alimenté par un évidement 5 sur lequel se raccorde une canalisation 6 d'amenée de gaz, elle-même reliée à une source de gaz 7.

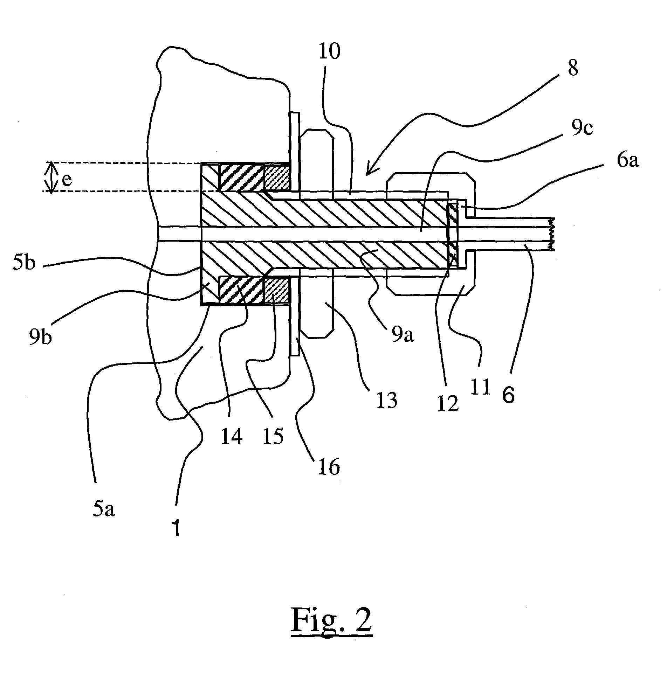

Le détail de la région II est fourni par la figure 2, sur laquelle on voit que l'évidement 5 reçoit un dispositif de connexion 8 monté à l'extrémité de la canalisation 6.

Ce dispositif 8 comprend un corps qui se compose d'une partie tubulaire 9a et d'une embase 9b, toutes deux traversées par un canal longitudinal 9c. La partie tubulaire 9a a un diamètre extérieur nettement plus petit que l'évidement 5 et laisse autour d'elle un jeu radial annulaire e, tandis que l'embase 9b a un diamètre qui n'est que légèrement inférieur à celui de l'évidement 5.

La partie tubulaire 9a est filetée et son filetage 10 reçoit une douille d'extrémité 11 qui coiffe l'extrémité évasée 6a de la conduite 6 et la comprime contre un joint d'étanchéité 12 plaqué en bout du corps, assurant ainsi un raccordement étanche entre l'intérieur de la conduite 6 et le canal longitudinal 9c du corps. Le filetage reçoit également un écrou 13 qui se visse plus près de l'embase 9b.

L'embase 9b et l'écrou 13 constituent deux pièces d'appui qui prennent en sandwich un joint d'étanchéité 14, une rondelle d'écartement 15 et une rondelle de positionnement 16, lesquels sont engagés dans cet ordre autour de la partie tubulaire du corps, avant vissage de l'écrou 13.

La partie tubulaire 9a joue le rôle de tirant rapprochant les deux pièces d'appui.

Les diamètres intérieurs du joint d'étanchéité 14 et des deux rondelles 15 et 16 correspondent sensiblement aux diamètres externes de la partie tubulaire 9a.

Le joint d'étanchéité 14 a un diamètre externe voisin de celui de l'évidement 5 de sorte qu'il pénètre légèrement en force dans ce dernier, tandis que la rondelle d'écartement 15 a un diamètre extérieur voisin de celui de l'embase 9b et peut pénétrer sans frottement dans l'évidement 5.

La rondelle de positionnement 16 a un diamètre externe très nettement plus grand que l'évidement 5 de manière à prendre appui sur la paroi externe de la busette 1 sans fragiliser les bords de l'évidement 5.

Le dispositif de connexion 8 s'utilise de la manière suivante:
Après avoir engagé successivement le joint d'étanchéité 14, la rondelle d'écartement 15, la rondelle de positionnement 16 et l'écrou 13 autour de la partie tubulaire 9a du corps, on visse l'écrou 13 jusqu'à le positionner à une distance de l'embase 9a telle que lorsque la rondelle de positionnement 16 arrive en butée contre la busette 1 lors de l'insertion du corps dans l'évidement 5, l'embase 9b se trouve au voisinage du fond 5b de l'évidement 5.

Le joint d'étanchéité 14 ayant pénétré légèrement en force dans le trou, le dispositif de connexion est retenu en position mais peut en sortir si on exerce une traction sur la canalisation 6.

On poursuit alors le vissage de l'écrou 13, ce qui provoque le déplacement du corps 9 vers l'extérieur du trou et donc le rapprochement de l'embase 9b de la rondelle 13.

Par l'intermédiaire des rondelles d'espacement 15 et d'écartement 16, le joint 14 est alors soumis à une pression axiale qui provoque son expansion radiale.

Il s'applique donc radialement contre la paroi latérale 5a de l'évidement et autour de la partie tubulaire 9a, réalisant ainsi d'une part, une parfaite étanchéité de connexion, d'autre part, le maintien mécanique du dispositif dans l'évidement 5.

Il est bien entendu que l'exemple décrit ci-dessus ne présente aucun caractère limitatif.

## Revendications

1. Dispositif de connexion d'une canalisation (6) de circulation de fluide à une pièce réfractaire (1) ayant une surface munie d'un évidement cylindrique (5), comprenant un joint (14) destiné à être logé dans l'évidement et une première pièce d'appui (13) comprimant le joint depuis l'extérieur de l'évidemment, **caractérisé en ce qu'**il comporte une seconde pièce d'appui (9b), apte à être insérée dans l'évidement pour prendre le joint (14) en sandwich avec la première pièce d'appui (13), et un tirant (9a) apte à rapprocher les deux pièces d'appui pour mettre le joint en compression.

2. Dispositif selon la revendication 1, comprenant un moyen (11) pour assujettir la canalisation (6) au tirant (9b) ou à la première pièce d'appui.

3. Dispositif selon l'une des revendications 1 et 2, dans lequel le joint (14) est en matériau réfractaire élastique, par exemple en graphite.

4. Dispositif selon l'une des revendications 1 à 3, dans lequel un moyen élastique, par exemple une rondelle élastique, est juxtaposé au joint pour compenser les dilatations thermiques du tirant et des pièces d'appui.

5. Dispositif selon l'une des revendications 1 à 4, dans lequel le tirant est un corps tubulaire (9a) traversé par un canal (9c) de passage du fluide.

6. Dispositif selon la revendication 5, dans lequel le tirant (9a) comporte un filetage externe (10), tandis que l'une (13) au moins de pièces d'appui comporte un taraudage correspondant, le rapprochement des deux pièces d'appui résultant d'un vissage de cette pièce d'appui sur le tirant.

7. Dispositif selon l'une des revendications 1 à 6, dans lequel le tirant (9a) est solidaire d'une (9b) des pièces d'appui, par exemple de la seconde qui se loge dans l'évidemment (5).

8. Dispositif selon la revendication 7, dans lequel des moyens anti-rotation sont prévus pour bloquer en rotation le tirant introduit dans l'évidement.

9. Dispositif selon l'une des revendications 1 à 8, dans lequel une rondelle d'espacement (15), par exemple en matériau réfractaire ou en acier, est juxtaposée au joint (14), du côté de la première pièce d'appui (13).

10. Pièce réfractaire (1), notamment busette ou tube de coulée, **caractérisée en ce qu'**elle comporte un évidement cylindrique (5) dimensionné pour recevoir deux pièces d'appui (9b, 13) et un joint d'étanchéité (14) pris en sandwich entre ces deux pièces d'appui.

11. Pièce réfractaire (1) selon la revendication 10, dans laquelle un méplat est formé autour de l'embouchure de l'évidement (5).

12. Pièce réfractaire (1) selon l'une des revendications 10 et 11, dans laquelle une forme anti-rotation est ménagée dans l'évidement (5).
